# EUROPÄISCHE PATENTSCHRIFT

(11) **EP 2 897 999 B1**
(45) Veröffentlichungstag und Bekanntmachung des Hinweises auf die Patenterteilung: **21.12.2016**
(21) Anmeldenummer: 13745662.0
(22) Anmeldetag: 05.08.2013
(51) Int. Cl.: C08G 59/18, C08G 59/56

(54) **2-K-KASCHIERKLEBSTOFF**
TWO-COMPONENT (2K) LAMINATION ADHESIVE
ADHÉSIF POUR STRATIFIÉS À DEUX CONSTITUANTS

(30) Priorität: 23.08.2012 DE 102012215027
(43) Veröffentlichungstag der Anmeldung: 29.07.2015
(73) Patentinhaber: Henkel AG & Co. KGaA, 40589 Düsseldorf (DE); Mitsubishi Gas Chemical Company, Inc., Tokyo 100-8324 (JP)
(72) Erfinder: EICHELMANN, Holger, 40724 Hilden (DE); MISIAK, Hanns, 42781 Haan (DE); HÜBNER, Christina, 40764 Langenfeld (DE); HÖLTGEN, Michael, 40591 Düsseldorf (DE); NEITZKE, Daniela, 40589 Düsseldorf (DE)
(74) Vertreter: dompatent von Kreisler Selting Werner - Partnerschaft von Patent- und Rechtsanwälten mbB
(86) Internationale Anmeldenummer: PCT/EP2013/066412
(87) Internationale Veröffentlichungsnummer: WO 2014/029606

(56) Entgegenhaltungen:
- EP-A1- 1 219 656
- EP-A1- 1 437 393
- WO-A1-2011/000619
- DATABASE WPI Week 201014 Thomson Scientific, London, GB; AN 2010-B75608 XP002725415, & JP 2010 030629 A (MITSUBISHI GAS CHEM CO INC) 12. Februar 2010 (2010-02-12)

## Beschreibung

Die Erfindung betrifft ein vernetzendes 2-Komponenten-Bindemittel auf Basis einer Epoxidkomponente und einer Aminkomponente, wobei die Aminkomponente eine erhöhte Anzahl von polaren Gruppen aufweist. Die Erfindung betrifft weiterhin einen 2K-Kaschierklebstoff und ein 2K-Beschichtungsmittel, die dieses Bindemittelsystem enthalten und als Barrierebeschichtung geeignet sind.

Die US 7282543 beschreibt eine Zusammensetzung auf wässriger Basis, die ein Polyepoxidharz enthält, das mindestens eine tertiäre Aminogruppe aufweist, wobei die Aminogruppe einen oder zwei Substituenten aufweist, die jeweils eine Epoxigruppe tragen. Als Vernetzer sind wässrige Polyaminoverbindungen beschrieben.

Die EP 1086 190 beschreibt ein reaktives System für Foliensubstrate, das ein Epoxidharz auf Basis von Bisphenol A, F, Resorcin oder aliphatischen Polyolen mit Epoxidgruppen umfasst, sowie einen Vernetzer auf Basis von Amino- oder Carboxylgruppen aufweisenden Verbindungen. Aromatische Gruppen enthaltende Vernetzer werden nicht beschrieben.

Die EP 1219656 beschreibt eine Beschichtungszusammensetzung mit Gasbarriereeigenschaften, wobei eine Komponente ein Epoxidharz ist, dass mindestens eine Epoxiamin-Einheit aufweist und ein Derivat von meta-Xylylendiamin (mXDA) ist, und der Härter eine Verbindung ist, durch Umsetzung von XDA mit Monocarbonsäure sowie polyfunktionellen Verbindungen, die danach eine Amidgruppe bilden.

Die EP 1437393 beansprucht einen Klebstoff mit einer Epoxidharzkomponente und einem Härter für diese Epoxidharzkomponente, wobei das ausgehärtete Reaktionsprodukt des Epoxidharzes und des Härters mindestens 40 Gew.-% von XDA Strukturen aufweist. Die Ausführungsbeispiele enthalten mit 57 bis 60 Gew.-%, bezogen auf die ausgehärtete Klebstoffzusammensetzung, einen hohen Anteil an XDA-Strukturen. Die Aminogruppen-tragende Härterkomponente wird dabei durch Umsetzung von mXDA und Methacrylsäure hergestellt. Aliphatische und/oder aromatischen Polyepoxide werden nicht eingesetzt. Das Molekulargewicht der Härterkomponente ist nicht offenbart.

Die WO2011/000619 beschreibt 2K-Epoxidklebstoffe, die einen hohen Anteil aromatischer Strukturen enthalten. Dabei wird als Aminkomponente ein Umsetzungsprodukt aus einem Überschuss von aromatischen Diaminen mit Epoxiden hergestellt. Dieses soll bevorzugt noch monomere aromatische Diamine enthalten.

JP 2010 030629 DATABASE WPI Week 201014 Thomson Scientific, London GB; AN 2010-B75608 offenbart eine Zwei-Komponenten-Zusammensetzung bestehend aus einer Komponente A enthaltend ein Epoxidharz und einer Komponente B enthaltend ein Umsetzungsprodukt aus einem araliphatischen Amin, Carbonsäure und einem Alkyl-Carbonat.

Bei den 2K-Beschichtungsmitteln des Standes der Technik werden im allgemeinen mXDA oder pXDA als Vernetzer eingesetzt. Es handelt sich dabei um primäre araliphatische Amine. Araliphatische Amine bestehen aus mindestens einem aromatischen Ring und mindestens einem aliphatischen Rest, bei denen die Aminogruppen nicht direkt am aromatischen Ring, sondern direkt am aliphatischen Rest gebunden vorliegen, und sich daher chemisch wie Aminogruppen aliphatischer Amine verhalten. Diese Amine können unter verschiedenen Umgebungsbedingungen in die Folienmaterialien migrieren. Deswegen sollen diese niedermolekularen Amine in Klebstoffen, die im verklebten Produkt mit Lebensmitteln in Kontakt kommen können, möglichst nicht oder in verminderter Menge enthalten sein.

Ein weiterer Nachteil der oben beschriebenen Systeme ist es in der Praxis, dass die Beschichtungen eine gute Haftung zu verschiedenen Substraten aufweisen müssen. Da für solche Verpackungen eine Vielzahl von unterschiedlichen Substraten eingesetzt wird, ist es zweckmäßig, dass der Klebstoff eine gute Haftung auf verschiedenen polaren oder unpolaren Substraten aufweist. Es ist außerdem vorteilhaft, wenn ein Klebstoff mit niedriger Viskosität eingesetzt wird. Zudem beobachtet man bei den oben beschriebenen Systemen häufig eine hohe Sprödigkeit bzw. Brüchigkeit. Es wird also nicht die Flexibilität erreicht, wie sie für den Einsatz im Bereich der flexiblen Verpackungen erforderlich ist. Ebenso ist die Topfzeit häufig zu gering.

Aufgabe der vorliegenden Erfindung ist es deswegen eine 2-Komponenten-Zusammensetzung zur Verfügung zu stellen, die aus einem Epoxid und aus niedrigviskosen Amin-Umsetzungsprodukten besteht. Dabei sollen die Anteile an nicht umgesetzten Aminverbindungen reduziert sein. Es sollen flexible Klebstoffschichten erhalten werden. Die Topfzeit soll ausreichend sein. Ein weiterer Gegenstand der Erfindung sind 2K-Kaschierklebstoffe oder 2K-Überzugsmittel, auf Basis der 2K-Zusammensetzung. Ein weiterer Gegenstand der Erfindung ist die Verwendung solcher Beschichtungsmittel zur Herstellung von beschichteten Folien, die nur eine niedrige Durchlässigkeit für gasförmige oder diffusionsfähige Stoffe aufweisen, beispielsweise für Sauerstoff oder Aromastoffe.

Die Aufgabe wird gelöst durch Bereitstellen einer Zwei-Komponenten-Zusammensetzung bestehend aus einer Komponente A enthaltend mindestens ein Epoxid mit einem zahlenmittleren Molekulargewicht (M_{N}) von 150 bis 5000 g/mol mit mindestens 2 Epoxidgruppen pro Molekül, einer Komponente B enthaltend ein Umsetzungsprodukt, hergestellt aus mindestens einem araliphatischen Polyamin und gegebenenfalls einem oder mehreren weiteren Aminen, mindestens einer ungesättigten Carbonsäure und/oder eines ihrer Derivate, bevorzugt ungesättigte Carbonsäureester, und mindestens einem aliphatischen und/oder aromatischen Polyepoxid, bevorzugt Diepoxid, in einem molaren Verhältnis von Amin zur Summe aus ungesättigter Carbonsäure und/oder ihren Derivaten und Polyepoxid von 1: 0,4 bis 1: 0,95 zu einem primäre Aminogruppen aufweisenden Produkt mit einem zahlenmittleren Molekulargewicht M_{N} unter 5000 g/mol.

Ein Bestandteil der erfindungsgemäßen 2K-Zusammensetzung besteht aus der Komponente A, die mindestens ein Epoxid, beispielsweise ein Polymer oder ein Oligomer, auf Basis von Polyestern, Polyamiden, Poly(meth)acrylaten, Polyurethanen, Polyharnstoffen, Polyolefinen, Polycarbonaten oder aromatischen sowie aliphatischen Polyepoxiden enthält. Es ist erfindungsgemäß notwendig, dass diese Epoxide zwei oder mehr Epoxidgruppen pro Molekül aufweisen. Die verschiedenen Epoxide werden im Folgenden auch als Epoxidbausteine oder Polyepoxide bezeichnet. Handelt es sich bei dem Epoxid um ein Polymer können die Epoxidgruppen über Epoxid-funktionelle Ausgangsverbindungen direkt bei der Polymersynthese eingebaut werden, alternativ ist es möglich, dass in einem Doppelbindungen aufweisenden Polymer diese in Epoxidgruppen überführt werden. Eine weitere Möglichkeit besteht darin, Polymere mit OH-Gruppen oder mit Isocyanatgruppen als Basispolymer mit niedermolekularen Epoxidverbindungen umzusetzen, die zusätzlich noch eine mit der OH-Gruppe oder der Isocyanatgruppe reaktive Gruppe aufweisen. Solche Reaktionsverfahren oder polymeranaloge Umsetzungen sind dem Fachmann bekannt.

Eine Klasse von geeigneten Basispolymeren sind OH-funktionalisierte Polyolefine. Polyolefine sind dem Fachmann bekannt und können in vielen Molekularmassen hergestellt werden. Solche Polyolefine auf Basis von Ethylen-, Propylen- oder höherkettigen α-Olefinen als Homo- oder Copolymer können entweder durch Copolymerisation von funktionelle Gruppen enthaltenden Monomeren oder durch Pfropfreaktionen funktionalisiert werden. Es können auch andere Olefin(co)polymere, wie beispielsweise Ethylen-Acrylat-Copolymere eingesetzt werden.

Weitere olefinische Polymere, die als Basispolymere zur Herstellung der Komponente (A) geeignet sind, sind beispielsweise Homo- oder Copolymerisate des 1,3-Butadiens, 2-Methyl-1,3-butadiens (Isoprens), 2-Methyl-1,3-hexadiens, 2-Methyl-1,3-cyclopentadiens und weiterer copolymerisierbarer Monomere.

Eine weitere Klasse von geeigneten Basispolymeren sind Polyesterpolyole. Diese können durch Polykondensation einer oder mehrerer Polycarbonsäuren und einem Gemisch aus Polyolen hergestellt werden. Als Polycarbonsäure sind solche mit einem aliphatischen, cycloaliphatischen, aromatischen oder heterocyclischen Grundkörper geeignet oder deren Säureanhydride und Ester. Als Polyol zur Umsetzung mit den Polycarbonsäuren kann eine Vielzahl von Polyolen eingesetzt werden. Beispielsweise sind aliphatische Polyole mit 2 primären oder sekundären OH-Gruppen pro Molekül und 2 bis 20 C-Atomen geeignet, beispielsweise auch Polyetherpolyole. Solche Polyesterpolyole sind auch kommerziell erhältlich.

Eine weitere Klasse von Basispolymeren enthält ein Polyamid-Rückgrat. Polyamide sind Umsetzungsprodukte von Diaminen mit Di- oder Polycarbonsäuren. Durch gezielte Synthese ist es möglich, endständig OH-Gruppen in Polyamide einzuführen.

Eine weitere Klasse von Basispolymeren sind Polyole auf Basis von Acrylaten. Es handelt sich dabei um durch Polymerisation von (Meth)acrylestern hergestellte Polymere, wie Acrylsäure-, Methacrylsäure-, Crotonsäure- oder Maleinsäureester. Bevorzugt werden übliche C₁ bis C₁₅ -Alkylester der (Meth)acrylsäure polymerisiert. Es können dabei auch OH-Gruppen tragende Monomere enthalten sein. Gegebenenfalls können auch andere copolymerisierbare Monomere enthalten sein. Geeignete OH-funktionelle Poly(meth)acrylate sind dem Fachmann bekannt. Eine andere Arbeitsweise ergibt direkt Acrylatpolymere mit Epoxidgruppen. Dabei werden Monomere, die Glycidylgruppen enthalten, einpolymerisiert.

OH-Gruppen der genannten Basispolymere können nach bekannten Verfahren mit niedermolekularen Verbindungen umgesetzt werden, die eine Epoxidgruppe enthalten sowie eine mit der OH-Gruppe reagierende Gruppe. Beispiele für solche Gruppen sind NCO-Gruppen, Halogene, Anhydride oder Ester. Nach Reaktion werden Polymere erhalten, die Epoxidgruppen aufweisen.

Eine weitere Klasse von geeigneten Basispolymeren sind Polyurethane. Diese können durch Umsetzung von Polyolen, insbesondere Diolen und/oder Triolen mit Di- oder Tri-Isocyanat-Verbindungen hergestellt werden. Dabei werden die Mengenverhältnisse so gewählt, dass endständig NCO-funktionalisierte Prepolymere erhalten werden. Insbesondere sollen die Polymere linear sein, d.h. überwiegend aus Diolen und Diisocyanaten hergestellt werden. Die bei der Synthese der PU-Polymere einsetzbaren Polyole und Polyisocyanate sowie geeignete Verfahren zur Herstellung sind dem Fachmann bekannt. Die Menge der Isocyanate wird dabei so im stöchiometrischen Überschuss gewählt, dass NCO-funktionelle PU-Prepolymere erhalten werden. Anschließend können die Isocyanatgruppen mit Epoxidgruppen-enthaltenden Alkoholen umgesetzt werden.

Die oben erwähnten Basispolymere können mehrere Epoxidgruppen aufweisen. Es können einzelne Polymere oder Gemische eingesetzt werden. Es ist erfindungsgemäß jedoch notwendig, dass im Durchschnitt zwei oder mehr Epoxidgruppen enthalten sind. Die so erhaltenen Epoxidgruppen-haltigen Polymere oder Oligomere sind als Komponente (A) im Rahmen der Erfindung geeignet.

Als Epoxide sind außerdem auch die bekannten Polyepoxidharze geeignet, die mindestens zwei Epoxidgruppen pro Molekül tragen. Die Polyepoxide können grundsätzlich gesättigte, ungesättigte, cyclische oder acyclische, aliphatische, alicyclische, aromatische oder heterocyclische Polyepoxidverbindungen sein. Beispiele für geeignete Polyepoxide schließen die bekannten Polyglycidylether ein, die durch Reaktion von Epichlorhydrin mit einem Polyphenol in Gegenwart von Alkali hergestellt werden. Hierfür geeignete Polyphenole sind beispielsweise Resorcinol, Brenzkatechin, Hydrochinon, Bisphenol A (Bis-(4-Hydroxy-phenyl)-2,2-propan), Bisphenol F (Bis(4-hydroxyphenyl)methan) oder 1,5-Hydroxynaphthalin. Es ist auch möglich entsprechende Amin-substituierten Verbindungen zu Epoxidharzen umzusetzen. Ebenso können auch aliphatische Polyole, beispielsweise Diole, zu Epoxidverbindungen umgesetzt werden. Beispiele dafür sind Ethandioldigycidylether, Butandiol-diglycidylether oder Digylcidylether von Polyethern mit einem Molekulargewicht von bis zu 500 g/mol. Insbesondere werden bei Raumtemperatur fließfähige Epoxidharze eingesetzt, die in der Regel ein EpoxidÄquivalentgewicht von 70 bis etwa 500 g/mol Epoxid aufweisen.

In einer besonders bevorzugten Ausführungsform handelt es sich bei der Komponente A mindestens teilweise um Epoxidbausteine, die eine aliphatische oder substituierte aliphatische Kette aufweisen. Es kann sich um Mischungen handeln von aromatischen Epoxidharzen mit solchen auf Basis der oben erwähnten Polyacrylate, -urethane, -ester oder -olefine oder insbesondere mit aliphatischen Polyepoxiden.

Die erfindungsgemäß geeigneten Polyepoxide der Komponente A sollen im Durchschnitt 2 bis 10 Epoxidgruppen aufweisen, insbesondere 2; 3; oder 4 pro Molekül. Die Polyepoxide können einzeln oder als Gemisch mit unterschiedlichen Strukturen vorliegen.

Um geeignete Applikationseigenschaften zu erhalten muss das Molekulargewicht der Epoxidbausteine (zahlenmittleres Molekulargewicht, M_{N}, über GPC gegen einen Polystyrolstandard bestimmt) 150 bis 5000 g/mol betragen, insbesondere 200 bis 2500 g/mol. Dabei sind für lösemittelfreie Klebstoffe eher niedrige Molekulargewichte bevorzugt, für lösemittelhaltige Systeme können auch höhere Molekulargewichte ausgewählt werden.

Die mit der Komponente A vernetzende zweite Komponente B enthält Umsetzungsprodukte, die aromatische Kerne enthalten, weiterhin primäre Aminogruppen sowie aliphatische Bestandteile. Diese werden als Umsetzungsprodukt aus araliphatischen Polyaminen und gegebenenfalls weiteren Aminen, ungesättigten Carbonsäuren und/oder ihren Derivaten und aliphatischen oder aromatischen Polyepoxiden hergestellt.

Als Polyamine sind beispielsweise Verbindungen der Formel

(I) R¹-Aryl-(-(CH₂)ₙ-NH₂)ₐ

mit
R¹ = H, C₁ bis C₆-Alkyl, insbesondere H
a = 2 oder 3
n = 1 bis 4
geeignet. Insbesondere sind Aminoalkyl-substituierte Phenylverbindungen oder Aminoalkyl-substituierte Naphthylverbindungen geeignet, insbesondere disubstitutierte Verbindungen. Beispielsweise sind Di(aminomethyl)naphthalin, Xylylendiamin (XDA), als Aminkomponente zur weiteren Umsetzung geeignet, insbesondere mXDA.

Als ungesättigte Carbonsäuren sind α-β-ungesättigte Carbonsäuren bevorzugt. Insbesondere sind Acrylsäure, Methacrylsäure oder Crotonsäure geeignet. Als Derivate ungesättigter Carbonsäuren werden die entsprechenden ungesättigten Carbonsäureester bevorzugt eingesetzt. Darunter sind beispielsweise Ester der Acrylsäure, Methacrylsäure oder der Crotonsäure geeignet. Die Estergruppe kann aus aliphatischen Alkoholen bestehen, beispielsweise C1- bis C8-Alkohole. Die ungesättigte Carbonsäure und/oder ihre Derivate werden mit araliphatischen Polyaminen umgesetzt. Die entsprechenden Umsetzungsprodukte müssen noch Amin-Endgruppen aufweisen.

In einer weiteren Ausführungsform der Erfindung kann bei dieser Reaktion oder in einem weiteren Reaktionsschritt gegebenenfalls zusätzlich mindestens ein weiteres Amin enthalten sein. Auch in diesem Fall müssen die entsprechenden Umsetzungsprodukte Amin-Endgruppen aufweisen. Bei dem weiteren Amin handelt es sich bevorzugt um ein aliphatisches Amin, insbesondere um ein primäres aliphatisches Amin. In einer bevorzugten Ausführungsform kann mindestens ein primärer Aminoalkohol umgesetzt werden. Bei den primären Aminoalkoholen handelt sich dabei um Verbindungen, die eine primäre Aminogruppe und eine oder mehrere OH-Gruppen aufweisen. Es ist zweckmäßig, wenn der primäre Aminoalkohol ein aliphatischer Aminoalkohol ist. Beispiele dafür sind Ethanolamin und Butanolamin. Die Menge der polaren Gruppen, insbesondere der H-Brücken-bildenden Gruppen im vernetzten Produkt kann so erhöht werden. Die Menge an Aminoalkohol wird vorzugsweise so ausgewählt, dass bis zu 50 Mol-% des araliphatischen Polyamins durch den Aminoalkohol ersetzt werden. Der Aminoalkohol wird also vorzugsweise in einer Menge von bis zu 50 Mol-% bezogen auf die Summe aus araliphatischem Polyamin und Aminoalkohol eingesetzt. Ethanolamin wird dabei bevorzugt verwendet. Als primäre aliphatische Amine können auch Amin-substituierte Polyether vewendet werden. Amin-substituierte Polyether werden vorzugsweise in einer Menge von bis zu 90 Mol-% bezogen auf die Summe aus araliphatischem Polyamin und den weiteren Aminen eingesetzt.

Ein weiterer notwendiger Bestandteil des Umsetzungsprodukts sind Polyepoxidverbindungen. Diese Epoxidverbindungen bewirken eine Verlängerung der Kette. Es kann sich um aromatische und/ oder aliphatische Epoxide handeln. Die Menge der Epoxide wird so gewählt, dass nach der Reaktion weiterhin Aminterminierte Polymere/Oligomere erhalten werden. Insbesondere kann das molare Verhältnis von Amin zu Polyepoxid von 1: 0,05 bis 1: 0,5 betragen, insbesondere 1: 0,1 bis 1: 0,4. Bevorzugt sind Diepoxide geeignet.

Die Reaktionen von ungesättigten Carbonsäuren und/oder ihren Derivaten, insbesondere Carbonsäureestern, mit Polyaminen und von Polyepoxiden mit Polyaminen sind dem Fachmann bekannt. Dabei werden die ausgewählten ungesättigten Carbonsäuren und/oder ihre Derivate, insbesondere Carbonsäureester, zusammen mit der entsprechenden Menge des Polyamins gemischt und ggf. unter Erwärmen umgesetzt. Gegebenfalls können flüchtige Reaktionsprodukte entfernt werden. Ebenso können diese aminhaltigen Reaktionsprodukte dann mit den Polyepoxiden umgesetzt werden. Der Fachmann kann geeignete Reaktionsbedingungen festlegen. Es ist ebenfalls möglich, dass zur besseren Umsetzung die Ausgangsbestandteile in nicht-reaktiven Lösemitteln gelöst werden. Diese kann man nach der Reaktion bei Bedarf durch Destillation entfernen, oder es wird eine lösemittelhaltige Komponente B erhalten. Durch die stufenweise Reaktionsführung werden die Anteile an monomeren Polyaminen vermindert.

Die erfindungsgemäß als Komponente B geeigneten Verbindungen weisen primäre Aminogruppen auf. Das Molekulargewicht dieser Verbindungen kann zwischen ca. 500 bis 5000 g/mol betragen, insbesondere bis ca. 3000 g/mol (zahlenmittleres Molekulargewicht, M_{N}, über GPC gegen einen Polystyrolstandard bestimmt). In einer Ausführungsform sind beide Komponenten fließfähig. Dabei kann die Viskosität unter 20000 mPas (25 °C, ISO 2555, Brookfield LVT) liegen. In einer anderen Ausführungsform sind in mindestens einer Komponente organische Lösemittel enthalten, es handelt sich dabei also auch um flüssige Komponenten.

Erfindungsgemäß ist es bevorzugt, dass in Komponente B und gegebenenfalls in Komponente A Epoxidbausteine mit aliphatischen Ketten eingesetzt werden. Dabei soll die Menge der aliphatischen Epoxide bezogen auf die Menge aller Epoxidbausteine bevorzugt von 10 Gew.-% bis 50 Gew.-% betragen, insbesondere von 15 bis 40 Gew.-%. Wird der Anteil zu gering gewählt, ist die vernetzte Zusammensetzung unflexibel und spröde. Wird die Menge zu hoch gewählt, sind die Barriereeigenschaften verschlechtert. Dabei kann der aliphatische Epoxidbaustein in der Komponente A und/oder in der Komponente B enthalten sein.

Aus den geeigneten Epoxidpolymeren als Komponente A und den Polyaminoverbindungen der Komponente B sind erfindungsgemäße 2K-Zusammensetzungen herzustellen. Dabei werden die beiden Komponenten im flüssigen Zustand gemischt, wobei das Verhältnis von primären Aminogruppen in Komponente B und Epoxidgruppen in Komponente A ungefähr äquimolar sein soll. Insbesondere beträgt das molare Verhältnis ca. 0,75 : 1 bis 1,25 : 1, insbesondere 0,95 : 1 bis 1,05 : 1, um einen Überschuss an nicht umgesetzten Aminogruppen zu vermeiden. Die beiden Komponenten werden getrennt gelagert und vor der Verarbeitung gemischt. Danach vernetzen die Bestandteile.
Aus den oben beschriebenen Zusammensetzungen können 2K-Klebstoffe hergestellt werden. In diesen Klebstoffen ist es zweckmäßig, wenn zusätzliche Bestandteile enthalten sind, wie beispielsweise Lösemittel, Weichmacher, Katalysatoren, Stabilisatoren, Haftvermittler, Pigmente und/oder Füllstoffe.

In einer Ausführungsform enthält die erfindungsgemäß geeignete Zusammensetzung mindestens ein klebrigmachendes Harz. Es können grundsätzlich alle Harze eingesetzt werden, die verträglich sind und ein homogenes Gemisch bilden. Es können beispielsweise aromatische, aliphatische oder cycloaliphatische Kohlenwasserstoff-Harze sein, sowie modifizierte oder hydrierte Versionen davon. Das Harz kann in einer Menge von 0 bis 50 Gew.-% eingesetzt werden, bevorzugt bis zu 20 Gew.-% bezogen auf die Zusammensetzung.

Es können auch in der Zusammensetzung weitere lösliche Polymere enthalten sein, wie Polymere, die Gas- oder Aroma-Barriereeigenschaften aufweisen. Beispiele dafür sind Polysaccharide wie Celluloseether oder -ester.

Weiterhin können auch Weichmacher enthalten sein, wie beispielsweise Weißöle, naphtenische Mineralöle, paraffinische Kohlenwasserstofföle, Adipate, Benzoatester, pflanzliche oder tierische Öle und deren Derivate. Insbesondere sind solche Weichmacher geeignet, die lebensmittelrechtlich unbedenklich sind, beispielsweise Citronensäureester oder kurzkettige Triglyceride.

Als gegebenenfalls einsetzbare Stabilisatoren oder Antioxidantien sind Phenole, sterisch gehinderte Phenole hohen Molekulargewichts, polyfunktionelle Phenole, schwefel- und phosphorhaltige Phenole oder Amine geeignet.

Es ist möglich, der Zusammensetzung zusätzlich Silanverbindungen als Haftvermittler zuzusetzen. Als Haftvermittler können die bekannten organofunktionellen Silane zugesetzt werden, wie (meth)acryloxyfunktionelle, epoxidfunktionelle, aminfunktionelle oder nicht-reaktiv substituierte Silane eingesetzt werden. In einer bevorzugten Ausführungsform werden dem Klebstoff 0,1 bis 5 Gew.-% dieser Silane zugesetzt. Es ist dabei je nach Auswahl des Silans zweckmäßig, dieses nur in einer Komponente zu mischen. Damit kann eine vorzeitige Reaktion und eine Verminderung der Lagerstabilität verhindert werden.

Als gegebenenfalls zusätzlich vorhandenes Additiv kann eine Zusammensetzung auch Katalysatoren enthalten. Als Katalysatoren können alle bekannten Verbindungen eingesetzt werden, die die Reaktion von Aminogruppe und Epoxidgruppe katalysieren können. Beispiele hierfür sind Metallverbindungen, wie Titanate, Wismutverbindungen, Zinncarboxylate oder Zirconchelate; oder Aminverbindungen oder ihre Salze mit Carbonsäuren, wie nicht-flüchtige Alkylamine, Amino-Alkanole, Morpholin und seine Derivate, Polyamine, wie Triethylentetramin, Guanidin, oder 1,8-Diazabicyclo-[5,4,0]-undecen-7 (DBU). Der Katalysator kann in einer Menge von 0 bis etwa 5 Gew.-% bezogen auf das Gesamtgewicht des Klebstoffs eingesetzt, bevorzugt von 0,1 bis 1 Gew.-% Katalysator.

Eine besondere Ausführungsform der Erfindung kann in den Zusammensetzungen auch Pigmente oder Füllstoffe enthalten. Es handelt sich dabei um feinteilige Pigmente, beispielsweise mit einer Teilchengröße < 5 µm. Eine Ausführungsform der Erfindung arbeitet mit plättchenförmigen Pigmenten, die in einer Komponente des Bindemittels dispergiert werden können. Eine andere Arbeitsweise setzt Nanopartikel ein. Diese haben üblicherweise eine Teilchengröße < 500 nm, insbesondere kleiner 100 nm. Dem Fachmann sind solche Pigmente oder Füllstoffe bekannt. Er kann sie nach üblichen Gesichtspunkten auswählen und mittels bekannter Verfahren in einer oder beiden Bindemittelkomponenten einarbeiten.

In einer Ausführungsform kann die Zusammensetzung auch Lösemittel enthalten. Es handelt sich dabei um die üblichen Lösemittel, die bei Temperaturen bis zu 120 °C verdampfen können. Die Lösemittel können ausgewählt aus der Gruppe der aliphatischen Kohlenwasserstoffe, der araliphatischen Kohlenwasserstoffe, Ketone, insbesondere C₁-C₄-Alkohole oder auch Wasser. In einer anderen bevorzugten Ausführungsform ist die 2K-Zusammensetzung lösemittelfrei.

Eine bevorzugt Ausführungsform besteht aus einer Komponente A enthaltend Polymere mit zwei oder mehr Epoxidgruppen, die bezogen auf die Komponente A allein oder anteilsweise aliphatische Epoxidharze enthält. Die Komponente B enthält ein Umsetzungsprodukt aus einem aromatischen Diamin mit ungesättigten Carbonsäureestern in Mengen, dass ein Amin-terminiertes Zwischenprodukt erhalten wird. Diese wird danach mit einem Gemisch aus aliphatischen und / oder aromatischen Diepoxiden im Unterschuss zu einem Amin-terminierten Polymer umgesetzt. Dabei soll die Zusammensetzung insgesamt 10 bis 50 Gew.-% aliphatische Epoxidbausteine (bezogen auf den Epoxidanteil) enthalten.

Aus der 2K-Zusammensetzung können zusammen mit den Additiven 2K-Klebstoffe oder 2K-Beschichtuntgsmittel hergestellt werden.

Da die Klebstoffe insbesondere zum Beschichten von großen Flächen geeignet sind, sollen sie bei Auftragstemperatur von ca. 20 bis 90°C eine niedrige Viskosität aufweisen. Die Viskosität der erfindungsgemäßen Klebstoffe, gemessen nach dem Mischen der Bestandteile, soll zwischen 200 bis 5000 mPas bei Auftragstemperatur betragen, bevorzugt 300 bis 3000 mPas, insbesondere bei 20 bis 60°C (Brookfield-Viskosimeter LVT, gemäß EN ISO 2555).

In den 2K-Klebstoffen können die bekannten Hilfsmittel und Additive zu der Komponente A oder zu der Komponente B gegeben werden, so lange diese nicht mit den Additiven reagieren. Es können Lösemittel enthalten sein, eine besondere Ausführungsform der Erfindung arbeitet jedoch lösemittelfrei. Dabei kann insbesondere durch die Auswahl der Komponente A und der Komponente B sichergestellt werden, dass bei Raumtemperatur wie 25 °C eine fließfähige Mischung der Komponente A und B erhalten wird.

Ein erfindungsgemäßer Klebstoff kann insbesondere als Kaschierklebstoff eingesetzt werden. Dabei werden die Klebstoffe in dünner Schicht auf eine Folie aufgetragen. Unmittelbar danach sollen gegebenenfalls enthaltene Lösemittel verdampfen. Danach wird eine zweite Folie auf die Klebstoffschicht aufgebracht und mit Druck verpresst. Bei einer erfindungsgemäßen Auswahl der Komponenten mit niedriger Viskosität können Lösemittel vermieden werden.

Als Folienmaterialien zum Herstellen von Mehrschichtfolien können die bekannten flexiblen Folien eingesetzt werden. Es handelt sich dabei um Substrate aus thermoplastischen Kunststoffen in Folienform, beispielsweise Polyolefine, wie Polyethylen (PE) oder Polypropylen (PP, CPP, OPP), Polyvinylchlorid (PVC), Polystyrol (PS), Polyestern, wie PET, Polyamid, organische Polymere, wie Cellophan, es sind auch metallbedampfte Folien, mit SiO₂ oder Al₂O₃ beschichtete Folien, Metallfolien oder Papier als Substrate möglich. Dabei können die Folienmaterialen auch modifiziert sein, z.B. durch Modifizieren der Polymere mit funktionellen Gruppen, oder es können zusätzliche Komponenten, beispielsweise Pigmente, Farbstoffe, oder geschäumte Schichten in der Folie enthalten sein. Es kann sich um gefärbte, bedruckte, farblose oder transparente Folien handeln.

Eine besondere Ausführungsform der Erfindung besteht in der Bereitstellung eines wasserlöslichen 2K-Klebstoffs. Dabei ist es vorteilhaft, wenn die Komponenten eine erhöhte Anzahl von polaren Gruppen aufweisen um eine verbesserte Wasserlöslichkeit oder Wassermischbarkeit aufzuweisen. In diesem Falle ist es zusätzlich vorteilhaft, als weitere Bestandteile Emulgatoren oder Dispergierhilfsmittel einzusetzen. Diese unterstützen auch in geringen Mengen die Dispergierbarkeit der Komponenten in Wasser. Dabei sollen die Emulgatoren in Mengen von 0,1 bis 5 Gew.-% bezogen auf die Zusammensetzung zugemischt werden. Ionische Gruppen, die eine dauerhafte Wasserlöslichkeit ergeben, sind nicht enthalten. Nach der Vernetzung der beiden Komponenten bildet sich ein Netzwerk. Dieses ist nicht mehr wasserlöslich, weist aber eine gute Klebkraft und gute Barriereeigenschaften auf.

Eine weitere Ausführungsform der Erfindung setzt die 2K-Zusammensetzungen für 2K-Überzugsmittel ein. Diese Überzugsmittel können im Prinzip die gleichen Bestandteile enthalten, die für die Kaschierklebstoffe beschrieben sind. Es ist bei der Auswahl jedoch darauf zu achten, dass die Überzugsmittel nach der Vernetzung eine glatte, nicht klebrige Oberfläche aufweisen. Eine gute Haftung soll nur zu dem Substrat bestehen, auf dem das Beschichtungsmittel in flüssiger Form aufgebracht wird. Dem Fachmann sind solche Bestandteile bekannt, die bei der Herstellung von nicht klebrigen Oberflächen nur im geringen Masse eingesetzt werden sollen oder zu vermeiden sind.

Ebenfalls Gegenstand der Erfindung ist eine Mehrschichtfolie, die mit einem erfindungsgemäß geeigneten Kaschierklebstoff verklebt ist, dabei können als Substrate die bekannten Kunststofffolien eingesetzt werden. Auf diese Folie wird mit einem erfindungsgemäßen Klebstoff eine kontinuierliche Schicht erzeugt, die unmittelbar nach dem Auftragen mit einer zweiten gleichen oder unterschiedlichen Folie verklebt wird. Zusätzlich zu den Zweischichtfolien ist es ebenso möglich, mit weiteren Arbeitsschritten eine Mehrschichtfolie zu erzeugen. Eine erfindungsgemäße Ausführungsform arbeitet mit durchsichtigen Folien, dafür ist es zweckmäßig wenn der erfindungsgemäße Klebstoff ebenfalls durchsichtig und nicht verfärbt wird. Es können in Mehrschichtfolien prinzipiell auch andere nicht-Kunststofffolien enthalten sein, beispielsweise Papier oder Metallfolien.

Der erfindungsgemäße Klebstoff zeigt eine gute Haftung zwischen den unterschiedlichen Schichten. Er zeigt keine Blasen oder Fehlstellen in der Klebstoffschicht. Die entstehenden Verbundsubstrate sind flexibel. Auch bei den möglichen weiteren Herstellungsschritten als Verpackung werden Risse und Delaminierungen vermindert.

Ein weiterer Gegenstand der Erfindung ist die Verwendung der erfindungsgemäßen Zusammensetzung zum Herstellen von Überzügen auf flexiblen Verbundsubstraten. Dabei können die oben angegebenen Additive und Hilfsstoffe im Beschichtungsmittel enthalten sein. Die Beschichtungsmittel sind flüssig oder können durch Erwärmen auf bis zu 90°C fließfähig aufgebracht werden. Diese Überzüge sind nach der Vernetzung flexibel und können deswegen besonders für flexible Mehrschichtfolien eingesetzt werden. Eine bevorzugte Ausführungsform trägt die erfindungsgemäßen Beschichtungsmittel bei einer Applikationstemperatur zwischen 20 bis 60°C auf.

Nach dem Vernetzen werden an der Oberfläche nicht klebrige Schichten erhalten. Solche Folien können dann auf bekannte Weise weiterverarbeitet werden, entweder werden zusätzliche Kaschierschichten aufgebracht oder sie werden konfektioniert.

Die erfindungsgemäß hergestellten Verbundfolien weisen eine hohe Flexibilität auf. Sie können transparent ausgeführt sein, d.h. sie enthalten nur Nanopartikel als Füllstoffe, keine Füllstoffe oder nur geringe Mengen an üblichen Füllstoffen, sodass die Klebstoffschicht im Verbund nicht wesentlich getrübt erscheint. Es kann sich aber auch um gefärbte oder pigmentierte Schichten handeln. Eine besonders vorteilhafte Eigenschaft der erfindungsgemäßen Schichten ist eine erhöhte Barrierewirkung der Schicht. Es hat sich gezeigt, dass Aromastoffe solche Mehrschichtfolien als Klebstoffschicht oder als Beschichtung schlechter durchdringen können als konventionell verklebte Folien. Auch ist eine verbesserte Stabilität gegen Diffusion von Gasen, beispielsweise Sauerstoff, oder Wasserdampf festzustellen. Weiterhin hat sich gezeigt, dass durch die erfindungsgemäß aufgebaute Komponente B die Mengen von aromatischen nicht gebundenen Diaminen in der Klebstoffschicht vermindert werden.

Die erfindungsgemäßen Zusammensetzungen können auf einfache Art und Weise zu 2K-Beschichtungsmittel oder 2K-Klebstoffen weiterverarbeitet werden. Bei Verwendung dieser Klebstoffe oder Beschichtungsmittel auf Foliensubstraten, werden Verbundfolien erhalten, die hohe Barriereeigenschaften aufweisen. Die Barriereeigenschaften können auf verschiedene Bestandteile bezogen werden, beispielsweise kann die Diffusion von Sauerstoff vermindert werden. Eine andere Ausführungsform vermindert die Diffusion von Wasser. Weiterhin ist es möglich, die Diffusion von Aromastoffen beispielsweise aus einer Verpackung oder in eine Verpackung zu vermindern.

Die Haftung zu den verschiedenen Substratmaterialien ist gut. Auch bei mechanischer Belastung der Verbundmaterialien, beispielsweise der verklebten Folien, ist keine Trennung zwischen verklebten Flächen zu beobachten. Aus den erfindungsgemäßen Verbundmaterialien können beispielsweise Verpackungen hergestellt werden. Durch die Barrierewirkung sind solche Verpackungen für empfindliche Gegenstände geeignet, beispielsweise für Lebensmittel oder pharmazeutische Güter. Ein weiteres Anwendungsgebiet sind technische Kaschierungsverklebungen, beispielsweise Verklebungen von flexiblen Schaltungen oder ähnlichen Gegenständen.

### Beispiele:

### Beispiel 1:

354 g (2,6 mol) meta-Xylylendiamin (mXDA) wurden in einen Kolben gegeben und gerührt. Ethylacrylat (137,6 g; 1,375 mol) wurde bei T= 50-70 °C langsam in einem Zeitraum von ∼1 h zugegeben. (Verhältnis (mol): mXDA / Et-Acr. = 1 : 0,53). Die Temperatur wurde für 15 min bei 70°C gehalten. Die Mischung wurde bei 140°C gehalten und das entstehende Ethanol abdestilliert. Danach wurde T auf 170° - 190°C für 3:15 h angehoben und danach abgekühlt auf Raumtemperatur. Es wurden 375 g Ethanol als Lösemittel zugegeben. Es wurden Bisphenol-A-diglycidylether (84,8 g; 0,25 mol) und 1,4-Butandiol-diglycidylether (46,4 g; 0,23 mol) über einen Zeitraum von 10 Minuten zugegeben. Die Temperatur wurde bei 70°C für eine Stunde gehalten und danach abgekühlt. Die Reaktionsmischung wurde mit Ethanol entsprechend Tabelle 1 verdünnt. Das zahlenmittlere Molekulargewicht M_{N} beträgt 604 (GPC).

### Beispiel 2:

0,38 mol mXDA und 0,19 Mol Ethanolamin wurden in einem Kolben unter Rühren gemischt und auf eine Temperatur von 60°C erwärmt. Es wurden 0,35 mol Ethylacrylat in 80 min. zugegeben. Die Reaktionstemperatur wurde auf 135°C erhöht und dort für eine Stunde gehalten. Entstehendes Ethanol wurde über einen Zeitraum von 5 - 6 h abdestilliert, wobei die Temperatur auf 170°C angehoben wurde, bis ca. 90 % der theoretischen Menge gemessen wurde. Danach wurde auf RT abgekühlt. Es wurden über einen Zeitraum von ca. 30 min. Bisphenol-A-diglycidyl ether (0,08 mol) zugegeben. Die Temperatur wurde auf 70°C gebracht und eine Stunde gehalten. Das Produkt wurde abgekühlt auf RT. Dabei kann ggf. etwas Ethanol zugesetzt werden, um die Viskosität einzustellen.

### Beispiel 3:

Analog Beispiel 2, nur wird anstatt des Bisphenol-A-diglycidylethers eine Mischung aus je 0,08 mol Bisphenol-A-diglycidylether und Butylenglycol-1,4-diglycidylether eingesetzt.

### Beispiel 4:

Das Verfahren nach Beispiel 2 wurde mit den folgenden Mengen wiederholt: Ethanolamin: 0,17 mol; mXDA: 0,35 mol; Ethylacrylat: 0,39 mol; Bisphenol-A-diglycidylether: 0,09 mol.

### Beispiel 5:

0,5 mol Ethylacrylat u. 1,0 mol mXDA wurden analog Beispiel 1 umgesetzt. Nach Abdestillieren des Ethanols u. Abkühlen auf RT wurden 145 g Ethanol (als Lösungsmittel) zugegeben. Über einen Zeitraum von 10 min wurden 4,5 mol Butylenglycol-1,4-diglycidylether zugegeben. Die Temperatur von 70 °C wurde über einen Zeitraum von 30 min gehalten. 5,0 mol Jeffamine T-403 wurden innerhalb von 3 min zugeben und für 2 h gerührt. Die Mischung wurde dann für 1 h bei 50°C gehalten.
Das zahlenmittlere Molekulargewicht M_{N} beträgt 600 (GPC).

### Vergleichsbeispiel:

Die Herstellung wie unter Beispiel 1, allerdings ohne Verwendung von Polyepoxiden mit den folgenden Mengen:
3,13 kg (22,97 mol) meta-Xylylendiamin (mXDA); 1,22 kg (12,15 mol) Ethylacrylat. Das zahlenmittlere Molekulargewicht M_{N} beträgt 600 (GPC).

### Verklebungen:

Als Komponente A wurde Butandiol-diglycidylether (Härter 1) oder Tetraglycidyl-mXDA (Härter 2) eingesetzt. Das Lösungsmittel wurde nach dem Auftragen in einem Trockentunnel bei erhöhter Temperatur (40-70 °C) und unter Luftbewegung entfernt, bevor die Substrate verklebt wurden.

| Klebstoff (Prozentangaben in Gew.-%) | Härter | Folie | Haftung N/ 15 mm | OTR cm³/ d m² bar | Menge B:A (Gewicht) |
|---|---|---|---|---|---|
| 2 K PU-Klebstoff handelsüblich | Isocyanat-Härter | OPA/PE | | 26 | |
| Beispiel 1 (50% in EtOH) | Härter 2 | OPA/PE | 1 | 15 | 3,6 : 1 |
| Beispiel 1 (60% in EtOH) | Härter 2 | OPA/PE | 1,1 | 16 | 3,5 : 1 |
| Beispiel 4 (65% in EtOH) | Härter 2 | OPA/PE | 1 | 7 | 6,4 : 1 |
| Beispiel 2 (65% in EtOH) | Härter 2 | OPA/PE | | 11 | 5,5 : 1 |
| Beispiel 5 (50% in EtOH) | Härter 1 | OPA/PE | 2,2 | 15 | 1 : 0,2 |
| Beispiel 5 (50% in EtOH) | Härter 2 | OPA/PE | 3,1 | 14 | 1 : 0,17 |
| 2 K PU-Klebstoff handelsüblich | Isocyanat-Härter | PET /PE | | 115 | |
| Beispiel 1 (50% in EtOH) | Härter 1 | PET /PE | 1,3 | 78 | 7,5 : 1 |
| Beispiel 2 (50% in EtOH :EtOAc) | Härter 1 | PET /PE | 2,8 | 80 | 6,5 : 1 |
| Beispiel 3 (50% in EtOH :EtOAc) | Härter 1 | PET /PE | 3,2 | 80 | 7,2 : 1 |
| Beispiel 5 (50% in EtOH) | Härter 2 | PET /PE | | 83 | 5,5 : 1 |
| Ohne Beschichtung | | PET | | 116 | ./. |
| Beispiel 1 als Beschichtung | Härter 1 | PET | | 93 | 7,5 : 1 |

Es zeigt sich, dass die Diffusionswerte (oxygen transmission rate - OTR) mit einer erfindungsgemäßen Beschichtung besser sind als die Folie allein. Es zeigt sich weiter, dass auch in den verklebten Substraten der Diffusionswert niedriger ist. Weiterhin wird eine gute Verklebung erzielt.

### Mechanische Eigenschaften:

Die Aminoverbindung des Vergleichsbeispiels wird in Ethanol gelöst (60 Gew.-% Feststoffanteil) und mit Härter 2 gemischt (1:0,313). Diese Mischung wird in eine Form aus PTFE (Fläche: 100 mm x 100 mm) gefüllt, sodass ein man einen Film von 1 mm Dicke nach Trocknung und Aushärtung erhält. Weitere Filme wurden auf Grundlage der folgenden Beispiele aus der obigen Tabelle hergestellt:
- Beispiel 1 + Härter 1
- Beispiel 1 + Härter 2
- Beispiel 2 + Härter 2
- Beispiel 5 + Härter 2

Die Filme wurden nach einem Tag aus der Form gelöst und einen weiteren Tag getrocknet. Die Filme wurden dann gebogen (180°). Der auf dem Vergleichsbeispiel und Härter 2 basierende Film bricht dabei, die erfindungsgemäßen Filme dagegen nicht. Die erfindungsgemäßen Beispiele zeigen also eine verbesserte Flexibilität.

### Topfzeit/Exothermie:

Klebstoff und Härter werden bei Raumtemperatur (24 °C) in einen Weithalskolben gegeben und die Wärmeentwicklung über den zeitlichen Temperaturverlauf verfolgt. Folgende Zusammensetzungen wurden hergestellt und untersucht.
a) Die Aminkomponente des Vergleichsbeispiels wird in Ethanol gelöst (50 Gew.-% Feststoffanteil) und mit Härter 1 gemischt (1:0,31).
b) Die Aminkomponente des Beispiel 1 wird in Ethanol gelöst (50 Gew.-% Feststoffanteil) und mit Härter 1 gemischt (1:0,27).

Im Fall a) zeigt sich eine weitaus stärkere Temperaturerhöhung von bis zu 40 °C als im Fall b) von maximal nur 33 °C. Die höhere Reaktivität im Fall a) kann zu einer vorzeitigen Aushärtung der Mischung im Vorratsbehälter der Laminier-/Kaschiermaschine führen. Tatsächlich zeigt die erfindungsgemäße Zusammensetzung gemäß Fall b) eine Topfzeit (also die maximale Zeitspanne, in der eine Verarbeitung der Zusammensetzung nach Mischung der Komponenten noch möglich ist), von über 4 Stunden, wohingegen die Zusammensetzung gemäß Fall a) bereits zu einem früheren Zeitpunkt einen Viskositätsanstieg zeigt, der eine gute Verarbeitung nicht mehr zulässt.

### Messmethoden:

### Molekulargewicht:

Die Bestimmung des zahlenmittleren Molekulargewichts M_{N} erfolgt mittels Gel-Permeations-Chromatographie (GPC):
Standard: Polystyrolstandard der Firma PSS
Säulen: PLgel 50 A, 100 A und Ultrastyragel 500 ÅEluent, je 7,8 x 300 mm und 5 µm (Polymer Laboratories and Waters)
Säulenofentemperatur: 85 °C
Eluent: N-Dimethylacetamide mit 1 g / L Lithiumchlorid
Fließgeschwindigkeit: 1.0 mL / min
Detektor: Brechungsindexdetektor; Empfindlichkeit 16, 35 °C
Injektionsvolumen: 100 µL
200 ± 10 mg der Probe (6-fach-Messung) werden in einem 25 mL Messzylinder abgewogen, unter Zugabe des Eluents gelöst und der Messzylinder anschließend bis zur Markierung mit Eluent aufgefüllt. Die hergestellte Probe wird durch einen 0,45 µm Spritzenfilter in ein Probengefäß gefiltert. Die Bestimmung des Molekulargewichts basiert auf einer externen Kalibrierung (Polynom der 3. Ordnung) unter Zuhilfenahme des o.g. eng verteilten Polystyrolstandards der Firma PSS.

### Verbundhaftung:

Mittels Streifenscheider werden 15 mm breite Streifen des Verbundes geschnitten. Der Verbund wird per Hand oder an einer heißen Siegelbackenkante angetrennt. Gegebenenfalls kann das Einlegen eines Endes des Verbundstreifens in Ethylacetat hilfreich sein. Die Messung erfolgt mit einer Universal-Zugprüfmaschine, Kraftbereich 0-20 N (z.B. der Firmen Instron oder Zwick). Der vorher angetrennte Verbundstreifen wird eingespannt und die Zugprüfmaschine mit einer Abzugsgeschwindigkeit von 100 mm/min angefahren. Der Abzugswinkel beträgt 90° (manuell einzuhalten) und die Abzugslänge 5 - 10 cm (je nach Schwankungsbereich).

Die Messung wird drei Mal wiederholt. Die Verbundhaftung ergibt sich als Mittelwert dieser Dreifachmessung.

### Sauerstoffdurchlässigkeit (oxygen transmission rate - OTR):

Zur Bestimmung der Sauerstoffdurchlässigkeit werden OX-TRAN 2/21 H Messgeräte der Firma MOCON verwendet. Die Testzelle der Messgeräte besteht aus zwei Hälften. Die Folie wird zwischen den beiden Halbzellen angebracht. Durch die äußere Halbzelle wird Sauerstoff als Testgas geleitet. Die innere Halbzelle wird von Trägergas, einem Gemisch aus 95% Stickstoff und 5% Wasserstoff (im wesentlichen Formiergas) durchströmt. Der Sauerstoff, der die Folie durchdringt, wird vom Trägergas aufgenommen und zum Detektor transportiert. Der Sauerstoffsensor erzeugt bei Anwesenheit von Sauerstoff einen elektrischen Strom, der proportional zur ankommenden Menge an Sauerstoff ist.

### Viskosität:

Die Viskosität wird bei angegebener Temperatur nach der Norm ISO 2555 mit Hilfe eines Viskosimeters des Typs Brookfield LVT bestimmt. Die Auswahl der Spindel u. Scherrate hängt von der Temperatur und dem Viskositätsbereich ab (z. B. bei RT bis ∼ 30° und Viskositäten von ca. 1000 - 5000 mPas eignen sich Spindel 27 und eine Scherrate von 5 UpM)

## Patentansprüche

1. Zwei-Komponenten-Zusammensetzung bestehend aus einer Komponente A enthaltend Epoxide mit einem zahlenmittleren Molekulargewicht (M_{N}) von 150 bis 5000 g/mol mit mindestens 2 Epoxidgruppen pro Molekül, einer Komponente B enthaltend ein Umsetzungsprodukt, hergestellt aus araliphatischen Polyaminen und gegebenenfalls weiteren Aminen, ungesättigten Carbonsäuren und/oder ihren Derivaten und aliphatischen und/oder aromatischen Polyepoxi- den in einem molaren Verhältnis von Amin zur Summe aus ungesättigter Carbonsäure und/oder ihren Derivaten und Polyepoxid von 1:0,4 bis 1:0,95 zu einem primäre Aminogruppen aufweisenden Produkt mit einem zahlenmittleren Molekulargewicht (M_{N}) unter 5000 g/mol, wobei das zahlenmittlere Molekulargewicht (M_{N}) bestimmt wird wie in der Beschreibung unter "Molekulargewicht" im Kapitel "Messmethoden" beschrieben.

2. 2-K-Zusammensetzung nach Anspruch 1, **dadurch gekennzeichnet, dass** als Komponente A aliphatische und/oder aromatische Polymere mit Epoxidgruppen eingesetzt werden.

3. 2-K-Zusammensetzung nach Anspruch 1 oder 2, **dadurch gekennzeichnet, dass** in Komponente B Gemische aus aliphatischen und aromatischen Polyepoxiden als Baustein eingesetzt werden, insbesondere Diepoxide.

4. 2-K-Zusammensetzung nach Anspruch 1 bis 3, **dadurch gekennzeichnet, dass** die Summe der Epoxidbestandteile in A und B zwischen 10 bis 50 Gew.-% aliphatische Epoxidbausteine enthalten.

5. 2-K-Zusammensetzung nach Anspruch 1 bis 4, **dadurch gekennzeichnet, dass** als weiteres Amin Ethanolamin eingesetzt wird, in einer Menge von bis zu 50 Mol-% bezogen auf die Summe aus araliphatischem Polyamin und Ethanolamin.

6. 2-K-Zusammensetzung nach Anspruch 1 bis 5, **dadurch gekennzeichnet, dass** Komponente B und A im molaren Verhältnis von primären Aminogruppen in Komponente B zu Epoxidgruppen in Komponente A von 0,75:1 bis 1,25:1 gemischt werden.

7. 2-K-Zusammensetzung nach Anspruch 1 bis 6, **dadurch gekennzeichnet, dass** Komponente A Epoxide enthält, ausgewählt aus Epoxidgruppen tragenden Poly(meth)acrylaten, Polyolefinen, Polybutadienen, Polyestern, Polyamiden, Polyurethanen, aliphatischen und/oder aromatischen Polyepoxidharzen.

8. 2-K-Zusammensetzung nach Anspruch 1 bis 7, **dadurch gekennzeichnet, dass** die Zusammensetzung weitere homogen mischbare, nicht-reaktive Polymere enthält, insbesondere Derivate von Oligo- oder Polysacchariden.

9. 2-K-Zusammensetzung nach Anspruch 1 bis 8, **dadurch gekennzeichnet, dass** die Zusammensetzung C1 bis C4-Alkohole oder Wasser als Lösemittel enthält oder frei von anderen organischen Lösemitteln ist.

10. 2 K-Kaschierklebstoff enthaltend eine Zusammensetzung nach Anspruch 1 bis 9 zum Verkleben von Folien und Papier.

11. 2K-Beschichtungsmittel enthaltend eine Zusammensetzung nach Anspruch 1 bis 9 zum Beschichten von Folien und Papier.

12. Verwendung von Zusammensetzungen nach einem der Ansprüche 10 und 11 als Klebstoff oder Beschichtung für Foliensubstrate für Lebensmittelverpackungen oder Verpackungen von Medikamenten oder Medizinprodukten.

13. Verwendung von Zusammensetzungen nach einem der Ansprüche 10 und 11 als Klebstoff für technische Kaschierungen.

## Claims

1. A two-component composition composed of a component A containing epoxides having a number average molecular weight (MN) of 150 to 5000 g/mol with at least two epoxy groups per molecule, a component B containing a reaction product produced from araliphatic polyamines and optionally additional amines, unsaturated carboxylic acids and/or derivatives thereof and aliphatic and/or aromatic polyepoxides in a molar ratio of amine to the sum total of unsaturated carboxylic acid and/or its derivatives and polyepoxide of 1:0.4 to 1:0.95 to yield a product containing primary amino groups and having a number average molecular weight (MN) of less than 5000 g/mol, wherein the number average molecular weight (MN) is determined as described in the description under "Molecular Weight" in the chapter "Measuring Methods".

2. The two-component composition according to claim 1, **characterized in that** aliphatic and/or aromatic polymers having epoxy groups are used as component A.

3. The two-component composition according to claim 1 or 2, **characterized in that** mixtures of aliphatic and aromatic polyepoxides, in particular diepoxides, are used as a building block in component B.

4. The two-component composition according to claim 1 to 3, **characterized in that** the sum total of epoxide components in A and B contains between 10 and 50% by weight aliphatic epoxide building blocks.

5. The two-component composition according to claim 1 to 4, **characterized in that** ethanolamine is used as an additional amine in an amount of up to 50 mol %, based on the sum total of araliphatic polyamine and ethanolamine.

6. The two-component composition according to claim 1 to 5, **characterized in that** components A and B are mixed in a molar ratio of primary amino groups in component B to epoxy groups in component A of 0.75:1 to 1.25:1.

7. The two-component composition according to claim 1 to 6, **characterized in that** component A contains epoxides selected from poly(meth)acrylates, polyolefins, polybutadienes, polyesters, polyamides, polyurethanes, and aliphatic and/or aromatic polyepoxide resins containing epoxy groups.

8. The two-component composition according to claim 1 to 7, **characterized in that** the composition contains additional homogeneously miscible, nonreactive polymers, in particular derivatives of oligosaccharides or polysaccharides.

9. The two-component composition according to claim 1 to 8, **characterized in that** the composition contains C1 to C4 alcohols or water as the solvent, or is free of other organic solvents.

10. A two-component lamination adhesive containing a composition according to claim 1 to 9 for gluing films and paper.

11. A two-component coating agent containing a composition according to claim 1 to 9 for coating films and paper.

12. Use of compositions according to either of claims 10 and 11 as an adhesive or coating for film substrates for foodstuff packages or packages of medicaments or medicinal products.

13. Use of compositions according to either of claims 10 and 11 as an adhesive for technical laminations.

## Revendications

1. Composition bicomposant constituée d'un composant A contenant des époxydes ayant une masse moléculaire moyenne en nombre (M_{N}) de 150 à 5000 g/mol, avec au moins 2 groupes époxydes par molécule, d'un composant B contenant un produit de réaction préparé à partir de polyamines araliphatiques et éventuellement d'amines supplémentaires, d'acides carboxyliques insaturés et/ou de leurs dérivés et de polyépoxydes aliphatiques et/ou aromatiques selon un rapport molaire entre l'amine et la somme de l'acide carboxylique insaturé et/ou de ses dérivés et du polyépoxyde de 1:0,4 à 1:0,95, pour donner un produit comprenant des groupes amino primaires ayant une masse moléculaire moyenne en nombre (M_{N}) inférieure à 5000 g/mol, la masse moléculaire moyenne en nombre (M_{N}) étant déterminée comme décrit dans la description à la section « Masse Moléculaire » du chapitre « Méthodes de Mesure ».

2. Composition bicomposant selon la revendication 1, **caractérisée en ce qu'**on utilise en tant que composant A des polymères aliphatiques et/ou aromatiques ayant des groupes époxydes.

3. Composition bicomposant selon la revendication 1 ou 2, **caractérisée en ce qu'**on utilise en tant que constituants dans le composant B des mélanges de polyépoxydes aliphatiques et aromatiques, en particulier des diépoxydes.

4. Composition bicomposant selon les revendications 1 à 3, **caractérisée en ce que** la somme des constituants époxydes de A et de B contient 10 à 50 % en poids de constituants époxydes aliphatiques.

5. Composition bicomposant selon les revendications 1 à 4, **caractérisée en ce qu'**on utilise en tant qu'amine supplémentaire de l'éthanolamine, dans une quantité allant jusqu'à 50 % en moles sur la base de la somme de la polyamine araliphatique et de l'éthanolamine.

6. Composition bicomposant selon les revendications 1 à 5, **caractérisée en ce que** les composants B et A sont mélangés selon un rapport molaire entre les groupes amines primaires du composant B et les groupes époxydes du composant A de 0,75:1 à 1,25:1.

7. Composition bicomposant selon les revendications 1 à 6, **caractérisée en ce que** le composant A contient des époxydes choisis parmi les poly(méth)acrylates, les polyoléfines, les polybutadiènes, les polyesters, les polyamides, les polyuréthannes, les résines polyépoxydiques aliphatiques et/ou aromatiques portant des groupes époxyde.

8. Composition bicomposant selon les revendications 1 à 7, **caractérisée en ce que** la composition contient d'autres polymères non réactifs, miscibles jusqu'à homogénéité, en particulier des dérivés d'oligo- ou de polysaccharides.

9. Composition bicomposant selon les revendications 1 à 8, **caractérisée en ce que** la composition contient en tant que solvant des alcools en CI à C₄ ou de l'eau, ou est exempte d'autres solvants organiques.

10. Adhésif de stratification bicomposant, comprenant une composition selon les revendications 1 à 9, pour coller des feuilles et du papier.

11. Produit de couchage bicomposant contenant une composition selon les revendications 1 à 9, pour enduire des feuilles et du papier.

12. Utilisation de compositions selon l'une des revendications 10 et 11 en tant qu'adhésif ou couchage pour substrats en feuilles d'emballages de produits alimentaires ou d'emballages de médicaments ou de dispositifs médicaux.

13. Utilisation de compositions selon l'une des revendications 10 et 11 en tant qu'adhésif pour contrecollage technique.
